(19) Europäisches Patentamt
European Patent Office
Office européen des brevets

(11) **EP 4 362 135 A1**

(12) **EUROPEAN PATENT APPLICATION**
published in accordance with Art. 153(4) EPC

(43) Date of publication:
**01.05.2024 Bulletin 2024/18**

(21) Application number: **22828105.1**

(22) Date of filing: **19.05.2022**

(51) International Patent Classification (IPC):
$H01M\ 4/525$ (2010.01)   $H01M\ 4/131$ (2010.01)
$H01M\ 4/36$ (2006.01)   $H01M\ 4/505$ (2010.01)
$H01M\ 4/62$ (2006.01)   $H01M\ 10/052$ (2010.01)
$H01M\ 10/0562$ (2010.01)

(52) Cooperative Patent Classification (CPC):
H01M 4/131; H01M 4/36; H01M 4/505;
H01M 4/525; H01M 4/62; H01M 10/052;
H01M 10/0562; Y02E 60/10

(86) International application number:
**PCT/JP2022/020873**

(87) International publication number:
**WO 2022/270186 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021 JP 2021105204**

(71) Applicant: **Panasonic Intellectual Property
Management Co., Ltd.
Kadoma-shi, Osaka 571-0057 (JP)**

(72) Inventors:
• **NISHIO, Yusuke
Tokyo 103-0022 (JP)**
• **HASHIMOTO, Kazuya
Tokyo 103-0022 (JP)**
• **SASAKI, Izuru
Tokyo 103-0022 (JP)**

(74) Representative: **Grünecker Patent- und
Rechtsanwälte
PartG mbB
Leopoldstraße 4
80802 München (DE)**

(54) **POSITIVE ELECTRODE ACTIVE SUBSTANCE, COATED POSITIVE ELECTRODE ACTIVE SUBSTANCE, POSITIVE ELECTRODE MATERIAL, AND BATTERY**

(57)    The positive electrode active material 110 includes a complex oxide represented by Formula (1): $LiNi_xMe_{1-x}O_2$ where x satisfies $0.5 \leq x < 1$, and Me is at least one selected from the group consisting of Co, Mn, Al, Mg, Ca, Sr, Ba, B, Ga, Y, Ce, Sm, Gd, Er, Ti, Zr, V, Nb, Ta, Sb, Bi, Cr, Mo, and W. In an X-ray diffraction pattern obtained by X-ray diffraction measurement of the positive electrode active material 110 using Cu-K$\alpha$ rays, the ratio of the value of the full width at half maximum of a peak having the highest intensity within a diffraction angle 2θ range of greater than or equal to 40° and less than or equal to 50° to the value of the full width at half maximum of a peak corresponding to the (111) plane of a crystalline Si powder measured under the same conditions is less than or equal to 2.00.

FIG. 1

1000

100  110  120

EP 4 362 135 A1

**Description**

Technical Field

The present disclosure relates to a positive electrode active material, a coated positive electrode active material, a positive electrode material, and a battery.

Background Art

PTL 1 discloses a positive electrode including a positive electrode mixture that includes a positive electrode active material consisting of a complex oxide including lithium, nickel, cobalt, and manganese and a solid electrolyte, and an all-solid-state battery including the positive electrode.

Citation List

Patent Literature

PTL 1: Japanese Unexamined Patent Application Publication No. 2019-125510

Summary of Invention

The present disclosure provides a positive electrode active material that can reduce the resistance of a battery.
The present disclosure provides a positive electrode active material including a complex oxide represented by the following Formula (1):

$$LiNi_xMe_{1-x}O_2 \qquad (1)$$

where

x satisfies $0.5 \leq x < 1$, and
Me is at least one selected from the group consisting of Co, Mn, Al, Mg, Ca, Sr, Ba, B, Ga, Y, Ce, Sm, Gd, Er, Ti, Zr, V, Nb, Ta, Sb, Bi, Cr, Mo, and W, wherein

in an X-ray diffraction pattern obtained by X-ray diffraction measurement of the positive electrode active material using Cu-K$\alpha$ rays, the ratio of the value of the full width at half maximum of a peak having the highest intensity within a diffraction angle $2\theta$ range of greater than or equal to 40° and less than or equal to 50° to the value of the full width at half maximum of a peak corresponding to the (111) plane of a crystalline Si powder measured under the same conditions is less than or equal to 2.00.
According to the present disclosure, a positive electrode active material that can reduce the resistance of a battery can be provided.

Brief Description of Drawings

[Fig. 1] Fig. 1 is a cross-sectional view illustrating a schematic structure of a positive electrode material 1000 in Embodiment 3.
[Fig. 2] Fig. 2 is a cross-sectional view illustrating a schematic structure of a battery 2000 in Embodiment 4.
[Fig. 3] Fig. 3 is a graph showing X-ray diffraction patterns of the positive electrode active materials of Examples 1 to 8 and Comparative Example 1.

Description of Embodiments

(Underlying Knowledge Forming Basis of the Present Disclosure)

The present inventors have conducted intensive studies on factors that increase the resistance of a lithium ion battery and found that the resistance of the lithium ion battery changes as the crystallinity of an active material changes. The present inventors proceeded with further studies based on the finding and found that the resistance of a lithium ion battery can be reduced by increasing the crystalline size of an active material particle. On this occasion, the size of the crystallite size was decided by the size of the full width at half maximum of a peak in a diffraction pattern of X-ray diffraction measurement.

Based on the findings above, the present inventors arrived at the following positive electrode active material of the present disclosure as a new positive electrode active material that can reduce the resistance of a battery.

(Overview of one aspect according to the present disclosure)

The positive electrode active material according to a 1st aspect of the present disclosure is a positive electrode active material particle including a complex oxide represented by the following Formula (1) as a main component

$$LiNi_xMe_{1-x}O_2 \qquad (1)$$

where

x satisfies $0.5 \leq x < 1$, and
Me is at least one selected from the group consisting of Co, Mn, Al, Mg, Ca, Sr, Ba, B, Ga, Y, Ce, Sm, Gd, Er, Ti, Zr, V, Nb, Ta, Sb, Bi, Cr, Mo, and W, wherein

in an X-ray diffraction pattern obtained by X-ray diffraction measurement of the positive electrode active material using Cu-K$\alpha$ rays, the ratio of the value of the full width at half maximum of a peak having the highest intensity within a diffraction angle $2\theta$ range of greater than or equal to 40° and less than or equal to 50° to the value of the full width at half maximum of a peak corresponding to the (111) plane of a crystalline Si powder measured under the same conditions is less than or equal to 2.00.

According to the positive electrode active material according to the 1st aspect, the resistance of the battery can be reduced.

In a 2nd aspect of the present disclosure, for example, in the positive electrode active material according to the 1st aspect, the ratio of the full widths at half maximum of the peaks may be less than or equal to 1.90.

According to the positive electrode active material of the 2nd aspect, the resistance of the battery can be further reduced.

The coated positive electrode active material according to a 3rd aspect of the present disclosure includes:

the positive electrode active material according to the 1st or 2nd aspect; and
a coating material coating at least a part of the surface of the positive electrode active material, wherein
the coating material includes:

a lithium element (Li), and
at least one selected from the group consisting of an oxygen element (O), a fluorine element (F), and a chlorine element (Cl).

According to the coated positive electrode active material according to the 3rd aspect, the resistance of the battery can be reduced.

The positive electrode material according to a 4th aspect of the present disclosure includes:

at least one selected from the group consisting of the positive electrode active material according to the 1st or 2nd aspect and the coated positive electrode active material according to the 3rd aspect; and
a solid electrolyte.

According to the positive electrode material according to the 4th aspect, the resistance of the battery can be reduced.

In a 5th aspect of the present disclosure, for example, in the positive electrode material according to the 4th aspect, the solid electrolyte may include at least one selected from the group consisting of a sulfide solid electrolyte and a halide solid electrolyte.

According to the positive electrode material according to the 5th aspect, the resistance of the battery can be further reduced.

In a 6th aspect of the present disclosure, for example, in the positive electrode material according to the 5th aspect, the halide solid electrolyte is represented by the following Formula (2):

$$\text{Li}_a\text{M}_\beta\text{X}_\gamma \qquad (2)$$

where

$\alpha$, $\beta$, and $\gamma$ are each independently a value greater than 0,

M is at least one selected from the group consisting of metal elements excluding Li and metalloid elements, and

X may be at least one selected from the group consisting of F, Cl, Br, and I.

According to the positive electrode material according to the 6th aspect, the resistance of the battery can be further reduced.

In a 7th aspect of the present disclosure, for example, in the positive electrode material according to the 6th aspect, M may include yttrium.

According to the positive electrode material according to the 7th aspect, the resistance of the battery can be further reduced.

In an 8th aspect of the present disclosure, for example, in the positive electrode material according to the 6th or 7th aspect,

Formula (2) may satisfy:

$$2.5 \leq \alpha \leq 3;$$

$$1 \leq \beta \leq 1.1;$$

and

$$\gamma = 6.$$

According to the positive electrode material of the 8th aspect, the resistance of the battery can be further reduced.

In a 9th aspect of the present disclosure, for example, in the positive electrode material according to any one of the 6th to 8th aspects, X may include at least one selected from the group consisting of Cl and Br.

The battery according to a 10th aspect of the present disclosure include:

a positive electrode including the positive electrode material according to any one of the 4th to 9th aspects;

a negative electrode; and

an electrolyte layer disposed between the positive electrode and the negative electrode.

In the battery according to the 10th aspect, the resistance of the battery can be further reduced.

In an 11th aspect the present disclosure, for example, in the battery according to any one of the 6th to 8th aspects, the electrolyte layer may include a solid electrolyte having the same composition as a composition of the solid electrolyte included in the positive electrode material.

In the battery according to the 11th aspect, the charge and discharge efficiency can be further improved.

In a 12th aspect of the present disclosure, for example, in the battery according to the 10th or 11th aspect, the electrolyte layer may include a halide solid electrolyte having a composition different from a composition of the solid electrolyte included in the positive electrode material.

In the battery according to the 12th aspect, the resistance of the battery can be further reduced.

In a 13th aspect of the present disclosure, for example, in the batteries according to the 10th to 12th aspects, the electrolyte layer may include a sulfide solid electrolyte.

In the battery according to the 13th aspect, the resistance of the battery can be further reduced.

Embodiments of the present disclosure will now be described with reference to the drawings. The present disclosure is not limited to the following Embodiments.

(Embodiment 1)

The positive electrode active material according to Embodiment 1 includes a complex oxide represented by the following Formula (1):

$$LiNi_xMe_{1-x}O_2 \qquad (1)$$

where, in Formula (1) above, x satisfies $0.5 \leq x < 1$, and Me is at least one selected from the group consisting of Co, Mn, Al, Mg, Ca, Sr, Ba, B, Ga, Y, Ce, Sm, Gd, Er, Ti, Zr, V, Nb, Ta, Sb, Bi, Cr, Mo, and W.

In an X-ray diffraction pattern obtained by X-ray diffraction measurement of the positive electrode active material according to Embodiment 1 using Cu-Kα rays, the ratio of the value of the full width at half maximum of a peak having the highest intensity within a diffraction angle 2θ range of greater than or equal to 40° and less than or equal to 50° to the value of the full width at half maximum of a peak corresponding to the (111) plane of a crystalline Si powder measured under the same conditions is less than or equal to 2.00. Hereinafter, in an X-ray diffraction pattern obtained by X-ray diffraction measurement using Cu-Kα rays, the value of the full width at half maximum of a peak having the highest intensity within a diffraction angle 2θ range of greater than or equal to 40° and less than or equal to 50° is referred to as "FWHM". In addition, the value of the full width at half maximum of a peak corresponding to the (111) plane of a crystalline Si powder measured under the same conditions is referred to as "$FWHM_{Si}$". Here, as the crystalline Si powder that is subjected to measurement under the same conditions of the X-ray diffraction measurement of the positive electrode active material according to Embodiment 1, an Si standard sample is used. As the Si standard sample, a crystalline Si powder standard "NIST 640d" manufactured by NIST (National Institute of Standards and Technology) is used.

In the positive electrode active material in Embodiment 1, the crystallite size is enlarged by satisfying the above requirement that "the ratio of FWHM to $FWHM_{Si}$ is less than or equal to 2.00" (that is, FWHM/FWHMsi ≤ 2.00). As a result, in the positive electrode active material according to Embodiment 1, since the grain boundary can be reduced, the grain-boundary resistivity is reduced. Accordingly, in the positive electrode active material of embodiment 1, the resistance of a battery can be reduced.

In a lithium complex oxide with a layered rock-salt structure that is generally used as a positive electrode active material, it is known that a peak having the highest intensity within a diffraction angle 2θ range of greater than or equal to 40° and less than or equal to 50° is derived from diffraction of a (104) plane. It is known that the (104) plane is a crystal plane through which Li ions enter and exit. In contrast, it is known that a peak having the highest intensity within a diffraction angle 2θ range of greater than or equal to 15° and less than or equal to 20° is derived from a (003) plane. It is known that the (003) plane is a crystal plane through which Li ions hardly enter and exit. Both peaks show a similar tendency in the viewpoint of the crystallite size, and the peak of the (104) plane can more correctly evaluate the resistance of a battery by considering the possibility of orientation and so on.

In the positive electrode active material according to Embodiment 1, the ratio of the FWHM to the $FWHM_{Si}$ may be less than or equal to 1.90. Consequently, the positive electrode active material according to Embodiment 1 can have a larger crystallite size. Accordingly, the grain boundary is further decreased in the positive electrode active material according to Embodiment 1. As a result, the grain-boundary resistivity can be further reduced. Accordingly, in the positive electrode active material according to Embodiment 1, the resistance of a battery can be further reduced by satisfying a requirement of FWHM/FWHMsi ≤ 1.90.

The positive electrode active material according to Embodiment 1 is specified by the ratio of the FWHM to the $FWHM_{Si}$ not by the value of the FWHM. Accordingly, in specifying the active material according to Embodiment 1, the measurement error caused by the measurement apparatus need not be considered.

The positive electrode active material according to Embodiment 1 may include a complex oxide represented by Formula (1) above as a main component. Here, the "main component" means the component that is the most abundant in terms of mass ratio. The positive electrode active material according to Embodiment 1 may include greater than or equal to 75 mass% or greater than or equal to 90 mass% of the complex oxide represented by Formula (1) above. The positive electrode active material according to Embodiment 1 may consist of only a complex oxide represented by Formula (1) above.

The positive electrode active material according to Embodiment 1 may further include, for example, a material that can be used as an active material of an all-solid-state lithium ion battery, in addition to the complex oxide represented by Formula (1) above.

Examples of the material that can be used as the active material of an all-solid-state lithium ion battery are $LiCoO_2$, $LiNi_xCo_{1-x}O_2$ $(0 < x < 0.5)$, $LiNi_{1/3}Co_{1/3}Mn_{1/3}O_2$, $LiMnO_2$, a different kind element substituent Li-Mn spinel (e.g., $LiMn_{1.5}Ni_{0.5}O_4$, $LiMn_{1.5}Al_{0.5}O_4$, $LiMn_{1.5}Mg_{0.5}O_4$, $LiMn_{1.5}Co_{0.5}O_4$, $LiMn_{1.5}Fe_{0.5}O_4$, or $LiMn_{1.5}Zn_{0.5}O_4$), lithium titanate (e.g., $Li_4Ti_5O_{12}$), metal lithium phosphate (e.g., $LiFePO_4$, $LiMnPO_4$, $LiCoPO_4$, or $LiNiPO_4$), and a transition metal oxide (e.g., $V_2O_5$ or $MoO_3$).

Among the materials above, at least one lithium-containing complex oxide selected from the group consisting of $LiCoO_2$, $LiNi_xCo_{1-x}O_2$ $(0 < x < 0.5)$, $LiNi_{1/3}Co_{1/3}Mn_{1/3}O_2$, $LiMnO_2$, a different kind element substituent Li-Mn spinel, and metal lithium phosphate may be included.

The positive electrode active material according to Embodiment 1 is produced by, for example, a coprecipitation method. In the coprecipitation method, for example, a precursor made of a metal oxide including Ni and Me is produced, and the positive electrode active material according to Embodiment 1 can be produced by heat-treating the precursor together with a lithium source. A positive electrode active material having a small full width at half maximum that satisfies a requirement that "the ratio of FWHM to $FWHM_{Si}$ is less than or equal to 2.00" can be produced by, for example, controlling the heat-treatment conditions such as heat-treatment temperature and heat-treatment time. As an example, in the production of a positive electrode active material having a composition including Co and Mn as Me or a positive electrode active material having a composition including Co and Al as Me, the heat-treatment temperature may be, for example, greater than or equal to 760°C.

In order to obtain a positive electrode active material with a smaller full width at half maximum, the positive electrode active material may be annealed in an oxygen atmosphere or the like. When the positive electrode active material is produced, the heat treatment may be performed at a ratio of the Li raw material higher than the stoichiometric ratio of the active material. Alternatively, the annealing may be performed in the presence of a Li raw material.

(Embodiment 2)

Embodiment 2 will now be described. The description overlapping that in the above-described embodiment 1 is omitted as appropriate.

The coated positive electrode active material according to Embodiment 2 of the present disclosure includes a positive electrode active material and a coating material coating at least a part of the surface of the positive electrode active material. The positive electrode active material in the coating material coating at least a part of the surface is the positive electrode active material according to Embodiment 1 described above. The coating material includes a lithium element (Li) and at least one selected from the group consisting of an oxygen element (O), a fluorine element (F), and a chlorine element (Cl).

Since the coated positive electrode active material according to Embodiment 2 includes the positive electrode active material according to Embodiment 1, the resistance of a battery can be reduced. Furthermore, in the coated positive electrode active material according to Embodiment 2, at least a part of the surface of the positive electrode active material is coated by the coating material. Accordingly, since the interface resistance between the positive electrode active material and, for example, a solid electrolyte can be reduced, the resistance of a battery can be further reduced. In addition, the decomposition of the solid electrolyte due to the contact of the solid electrolyte and the positive electrode active material can also be suppressed by disposing such a coating material on the surface.

The coating material may coat a part of the surface or the whole of the surface of the positive electrode active material.

As described above, the coating material may include Li and at least one selected from the group consisting of O, F, and Cl.

When the coating material includes Li and O, the coating material may be, for example, an oxide solid electrolyte. The oxide solid electrolyte that can be used as the coating material is, for example, lithium niobate, lithium phosphate, lithium titanate, or lithium tungstate. The oxide solid electrolyte has high ion conductivity. The oxide solid electrolyte has excellent high-potential stability. Accordingly, the resistance of a battery can be further reduced by using an oxide solid electrolyte as the coating material.

When the coating material includes Li and at least one selected from the group consisting of F and Cl, the coating material may be, for example, a halide solid electrolyte.

When the coating material includes Li, O, and at least one selected from the group consisting of F and Cl, the coating material may be, for example, an oxyhalide solid electrolyte. The coating material may include Li, O, and F. In this case, the coating material may include at least one selected from the group consisting of lithium fluorozirconate, lithium fluoroaluminate, lithium fluorotitanate, and lithium fluoromagnesate.

The thickness of the coating material may be greater than or equal to 1 nm and less than or equal to 100 nm.

When the thickness of the coating material is greater than or equal to 1 nm, the positive electrode active material is prevented from direct contact with, for example, the solid electrolyte to suppress the reaction between the positive electrode active material and the solid electrolyte. When the thickness of the coating material is less than or equal to 100 nm, the thickness of the coating material does not become too large. Consequently, the resistance of a battery can be reduced.

The coated positive electrode active material according to Embodiment 2 can be produced by, for example, forming a coating material on the surfaces of the particles of the positive electrode active material. As the method for forming the coating material on the surfaces of the particles of the positive electrode active material, a known method can be used. For example, a liquid phase coating method, a vapor phase coating method, or a dry particle compounding method can be used.

(Embodiment 3)

Embodiment 3 will now be described. The description overlapping that in the above-described embodiment 1 or 2 is omitted as appropriate.

The positive electrode material according to Embodiment 3 of the present disclosure includes at least one selected from the group consisting of a positive electrode active material and a coated positive electrode active material and includes a solid electrolyte. As the positive electrode active material, the positive electrode active material described in Embodiment 1 is used. As the coated positive electrode active material, the coated positive electrode active material described in Embodiment 2 is used.

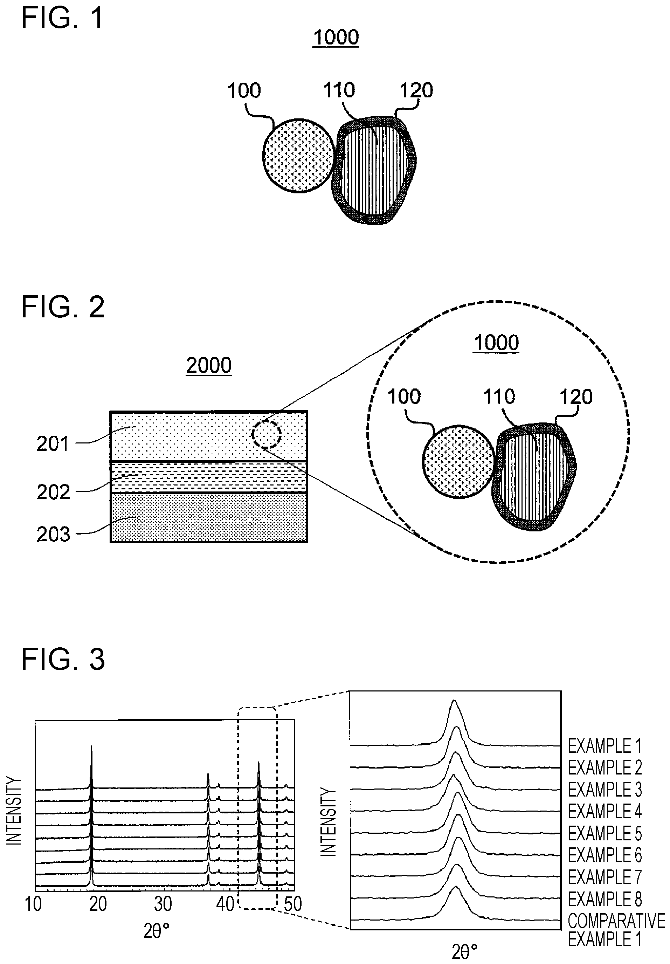

Fig. 1 is a cross-sectional view illustrating a schematic structure of a positive electrode material 1000 according to Embodiment 3. In the positive electrode material 1000 shown in Fig. 1, a coated positive electrode active material including a positive electrode active material 110 and a coating material 120 is used. The positive electrode material 1000 includes the coated positive electrode active material including the positive electrode active material 110 and the coating material 120 and a solid electrolyte 100.

The solid electrolyte included in the solid electrolyte 100 may include at least one selected from the group consisting of a sulfide solid electrolyte and a halide solid electrolyte.

When the solid electrolyte 100 includes a halide solid electrolyte, the halide solid electrolyte may be a compound represented by the following Formula (2):

$$Li_\alpha M_\beta X_\gamma \qquad (2)$$

where $\alpha$, $\beta$, and $\gamma$ are values greater than 0; M is at least one selected from the group consisting of metal elements excluding Li and metalloid elements; and X is at least one selected from the group consisting of F, Cl, Br, and I.

Here, the "metalloid elements" are B, Si, Ge, As, Sb, and Te. The "metal elements" are all elements excluding hydrogen in Groups 1 to 12 of the Periodic Table and all elements excluding B, Si, Ge, As, Sb, Te, C, N, P, O, S, and Se in Groups 13 to 16. That is, the "metalloid elements" or the "metal elements" are element groups that can become cations when they form inorganic compounds with halogen elements.

As the solid electrolyte 100, for example, $Li_3YX_6$, $Li_2MgX_4$, $Li_2FeX_4$, $Li(Al,Ga,In)X_4$, or $Li_3(Al,Ga,In)X_6$ can be used. Where, X is at least one selected from the group consisting of F, Cl, Br, and I.

In the present disclosure, "(A,B,C)" means "at least one selected from the group consisting of A, B, and C".

According to the configuration above, the resistance of a battery can be reduced. Consequently, the charge and discharge characteristics of the battery are improved.

Formula (2) may satisfy $2.5 \leq \alpha \leq 3$, $1 \leq \beta \leq 1.1$, and $\gamma = 6$.

In Formula (2), X may include at least one selected from the group consisting of Cl and Br.

In Formula (2), M may include yttrium (Y).

The solid electrolyte including Y may be, for example, a compound represented by the formula $Li_a M'_b Y_c X_6$. Where, $a + mb + 3c = 6$ and $c > 0$ are satisfied. M' is at least one selected from the group consisting of metal elements excluding Li and Y and metalloid elements; m represents the valence of M'; and X is at least one selected from the group consisting of F, Cl, Br, and I.

As M', at least one selected from the group consisting of Mg, Ca, Sr, Ba, Zn, Sc, Al, Ga, Bi, Zr, Hf, Ti, Sn, Ta, and Nb may be used.

As the solid electrolyte including Y, specifically, $Li_3YF_6$, $Li_3YCl_6$, $Li_3YBr_6$, $Li_3YI_6$, $Li_3YBrCl_5$, $Li_3YBr_3Cl_3$, $Li_3YBr_5Cl$, $Li_3YBr_5I$, $Li_3YBr_3I_3$, $Li_3YBrI_5$, $Li_3YClI_5$, $Li_3YCl_3I_3$, $Li_3YCl_5I$, $Li_3YBr_2Cl_2I_2$, $Li_3YBrCl_4I$, $Li_{2.7}Y_{1.1}Cl_6$, $Li_{2.5}Y_{0.5}Zr_{0.5}Cl_6$, $Li_{2.5}Y_{0.3}Zr_{0.7}Cl_6$, and so on can be used.

According to the configuration above, the resistance of a battery can be further reduced.

The halide solid electrolyte need not include sulfur. According to the configuration above, the occurrence of hydrogen sulfide gas can be suppressed. Accordingly, it is possible to realize a battery having improved safety.

The shapes of the solid electrolyte 100 and positive electrode active material 110 in Embodiment 3 are not particularly limited and may be, for example, acicular, spherical, or oval spherical. For example, the shapes of the solid electrolyte 100 and the positive electrode active material 110 may be particulate.

For example, when the shape of the solid electrolyte 100 in Embodiment 3 is particulate (e.g., spherical), the median diameter may be less than or equal to 100 $\mu$m.

When the median diameter of the solid electrolyte 100 is less than or equal to 100 $\mu$m, the positive electrode active material 110 and the solid electrolyte 100 can form a good dispersion state in the positive electrode material 1000. Consequently, the charge and discharge characteristics of the battery are improved.

In Embodiment 3, the median diameter of the solid electrolyte 100 may be less than or equal to 10 $\mu$m.

According to the configuration above, the positive electrode active material 110 and the solid electrolyte 100 can for a good dispersion state in the positive electrode material 1000.

In Embodiment 3, the median diameter of the solid electrolyte 100 may be smaller than that of the positive electrode active material 110.

According to the configuration above, the solid electrolyte 100 and the positive electrode active material 110 can form a better dispersion state in the positive electrode material 1000.

The median diameter of the positive electrode active material 110 may be greater than or equal to 0.1 $\mu$m and less than or equal to 100 $\mu$m.

When the median diameter of the positive electrode active material 110 is greater than or equal to 0.1 $\mu$m, the positive electrode active material 110 and the solid electrolyte 100 can form a good dispersion state in the positive electrode material 1000. As a result, the charge and discharge characteristics of the battery are improved.

When the median diameter of the positive electrode active material 110 is less than or equal to 100 $\mu$m, the diffusion speed of lithium in the positive electrode active material 110 is sufficiently secured. Accordingly, the battery can operate at high output.

In the present disclosure, the "median diameter" means the particle diameter at which the accumulated volume in a volume-based particle size distribution is equal to 50%. The volume-based particle size distribution is measured with, for example, a laser diffraction measurement apparatus or an image analysis apparatus.

In the positive electrode material 1000 in Embodiment 3, the particles of the solid electrolyte 100 and the particles of the positive electrode active material 110 may be in contact with each other as shown in Fig. 1. On this occasion, the coating material 120 and the positive electrode active material 110 are in contact with each other.

The positive electrode material 1000 in Embodiment 3 may include particles of multiple solid electrolytes 100 and particles of multiple positive electrode active materials 110.

In the positive electrode material 1000 in Embodiment 3, the content of the solid electrolyte 100 and the content of the positive electrode active material 110 may be the same or different.

(Embodiment 4)

Embodiment 4 will now be described. The description overlapping that in any of the above-described Embodiments 1 to 3 is omitted as appropriate.

Fig. 2 is a cross-sectional view illustrating a schematic structure of a battery 2000 in Embodiment 4.

The battery 2000 in Embodiment 4 includes a positive electrode 201, an electrolyte layer 202, and a negative electrode 203.

The positive electrode 201 includes a positive electrode material 1000. The positive electrode material 1000 is the positive electrode material described in Embodiment 3.

The electrolyte layer 202 is disposed between the positive electrode 201 and the negative electrode 203.

According to the configuration above, the resistance of a battery can be reduced.

In the volume ratio "v1:(100 - v1)" of the positive electrode active material 110 and the solid electrolyte 100 included in the positive electrode 201, $30 \leq v1 \leq 95$ may be satisfied. When $30 \leq v1$ is satisfied, the energy density of the battery 2000 is sufficiently secured. When $v1 \leq 95$ is satisfied, high-output operation is possible.

The thickness of the positive electrode 201 may be greater than or equal to 10 $\mu$m and less than or equal to 500 $\mu$m. When the thickness of the positive electrode 201 is greater than or equal to 10 $\mu$m, the energy density of the battery 2000 is sufficiently secured. When the thickness of the positive electrode 201 is less than or equal to 500 $\mu$m, high-output operation is possible.

The electrolyte layer 202 is a layer including an electrolyte material. The electrolyte material is, for example, a solid electrolyte material. That is, the electrolyte layer 202 may be a solid electrolyte layer. As the solid electrolyte, the materials exemplified as the material of the solid electrolyte 100 in Embodiment 3 may be used. That is, the electrolyte layer 202 may include a solid electrolyte having a composition that is the same as the composition of the solid electrolyte 100 included in the positive electrode material 1000.

According to the configuration above, the charge and discharge efficiency of the battery 2000 can be further improved.

The electrolyte layer 202 may include a halide solid electrolyte having a composition that is different from the composition of the solid electrolyte included in the positive electrode material 1000.

The electrolyte layer 202 may include a sulfide solid electrolyte.

The electrolyte layer 202 may include only one solid electrolyte selected from the group consisting of the above-mentioned solid electrolytes or may include two or more solid electrolytes selected from the group consisting of the above-mentioned solid electrolytes. The multiple solid electrolytes have compositions different from each other. For example, the electrolyte layer 202 may include a halide solid electrolyte and a sulfide solid electrolyte.

The thickness of the electrolyte layer 202 may be greater than or equal to 1 $\mu$m and less than or equal to 300 $\mu$m. When the thickness of the electrolyte layer 202 is greater than or equal to 1 $\mu$m, a short circuit between the positive electrode 201 and the negative electrode 203 is unlikely to occur. When the thickness of the electrolyte layer 202 is less than or equal to 300 $\mu$m, high-output operation is possible.

The negative electrode 203 includes a material that has a property of occluding and releasing metal ions (e.g., lithium ions). The negative electrode 203 includes, for example, a negative electrode active material.

As the negative electrode active material, for example, a metal material, a carbon material, an oxide, a nitride, a tin compound, or a silicon compound can be used. The metal material may be a single metal. Alternatively, the metal material may be an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of the capacity density, silicon (Si), tin (Sn), a silicon compound, or a tin compound can be used suitably.

The negative electrode 203 may include a solid electrolyte material. According to the configuration above, the lithium ion conductivity in the negative electrode 203 is enhanced, and high-output operation is possible. The lithium ion conductivity in the negative electrode 203 is enhanced, and high-output operation is possible. As the solid electrolyte, the materials exemplified in Embodiment 3 may be used. That is, the negative electrode 203 may include a solid electrolyte having a composition that is the same as the composition of the solid electrolyte included in the positive electrode material 1000.

The median diameter of the negative electrode active material may be greater than or equal to 0.1 $\mu$m and less than or equal to 100 $\mu$m.

When the median diameter of the negative electrode active material is greater than or equal to 0.1 $\mu$m, the negative electrode active material and the solid electrolyte material can form a good dispersion state. As a result, the charge and discharge characteristics of the battery are improved.

When the median diameter of the negative electrode active material is less than or equal to 100 $\mu$m, the diffusion speed of lithium in the negative electrode active material is sufficiently secured. Accordingly, the high-output operation of the battery is possible.

The median diameter of the negative electrode active material may be larger than that of the solid electrolyte material. Consequently, a good dispersion state of the negative electrode active material and the solid electrolyte material can be formed.

In the volume ratio "v2:(100 - v2)" of the negative electrode active material and the solid electrolyte material included in the negative electrode 203, $30 \leq v2 \leq 95$ may be satisfied. When $30 \leq v2$ is satisfied, the energy density of the battery 2000 is sufficiently secured. When $v2 \leq 95$ is satisfied, high-output operation is possible.

The thickness of the negative electrode 203 may be greater than or equal to 10 $\mu$m and less than or equal to 500 $\mu$m. When the thickness of the negative electrode 203 is greater than or equal to 10 $\mu$m, the energy density of the battery 2000 is sufficiently secured. When the thickness of the negative electrode 203 is less than or equal to 500 $\mu$m, high-output operation is possible.

At least one selected from the group consisting of the positive electrode 201, the electrolyte layer 202, and the negative electrode 203 may include a binder for the purpose of improving the adhesion between individual particles. The binder is used for improving the binding property of the material constituting the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. As the binder, a copolymer of two or more materials selected from the group consisting of tetrafluoroethylene, hexafluoroethylene, hexafluoropropylene, perfluoroalkyl vinyl ether, fluorinated vinylidene, chlorotrifluoroethylene, ethylene, propylene, pentafluoropropylene, fluoromethyl vinyl ether, acrylic acid, and hexadiene can also be used. Two or more selected from these binders may be mixed and used as the binder.

At least one selected from the group consisting of the positive electrode 201 and the negative electrode 203 may include a conductive additive for the purpose of enhancing the electron conductivity. As the conductive additive, for example, graphite such as natural graphite and artificial graphite, carbon black such as acetylene black and Ketjen black, conductive fibers such as carbon fibers and metal fibers, metal powders such as fluorinated carbon and aluminum, conductive whiskers such as zinc oxide and potassium titanate, conductive metal oxides such as titanium oxide, and conductive polymeric compounds such as polyaniline, polypyrrole, and polythiophene can be used. When a carbon conductive additive is used, the cost can be reduced.

The battery in Embodiment 4 can be configured as batteries of various shapes such as a coin type, a cylindrical type, a square type, a sheet type, a button type, a flat type, and a stacked type.

EXAMPLES

The present disclosure will now be described in more detail with reference to Examples.

«Example 1»

[Production of positive electrode active material]

Nickel sulfate, cobalt sulfate, and manganese sulfate were dissolved in water, and nickel, cobalt, and manganese were coprecipitated with an alkali aqueous solution containing sodium hydroxide to produce a hydroxide of nickel, cobalt, and manganese. This hydroxide was subjected to filtration, drying, and thermal decomposition to produce an oxide including nickel, cobalt, and manganese at an intended ratio. This oxide and lithium hydroxide were mixed, followed by heat treatment at 850°C in an oxygen atmosphere to produce a positive electrode active material $LiNi_{0.8}(Co,Mn)_{0.2}O_2$. Hereinafter, the produced $LiNi_{0.8}(Co,Mn)_{0.2}O_2$ is referred to as NCM-1. Thus, a positive electrode active material of Example 1 was obtained.

[Measurement of full width at half maximum]

Fig. 3 is a graph showing an X-ray diffraction pattern of the positive electrode active material of Example 1. That is, Fig. 3 is a graph showing an X-ray diffraction pattern of NCM-1 of Example 1.
The X-ray diffraction pattern of the solid electrolyte material of Example 1 was measured using an X-ray diffractometer (Rigaku Corporation, MiniFlex 600) in a dry environment having a dew point of less than or equal to -50°C. The measurement was performed by a $\theta$-$2\theta$ method using Cu-K$\alpha$ rays (wavelength: 1.5405 angstrom and 1.5444 angstrom) as an X-ray source. The measurement angle interval was 0.01°. The divergence angle of the divergence slit was 0.25°. The slit width of the length limiting slit was 5 mm.
The value of the diffraction angle $2\theta$ of a peak having the highest intensity within a diffraction angle $2\theta$ range of greater than or equal to 40° and less than or equal to 50° was defined as $2\theta_{top}$, and the intensity of the peak was defined as $I_{top}$. The average of intensities in a diffraction angle $2\theta$ range of greater than or equal to 40° and less than or equal to 41° was defined as $I_{bg}$. That is, $I_{bg}$ represents the intensity at the base line. The half maximum $I_{htop}$ of the $I_{top}$ was defined by $[(I_{top} - I_{bg})/2 + I_{bg}]$.
The diffraction angle $2\theta$ at which the intensity was closest to the $I_{htop}$ within a diffraction angle $2\theta$ range of greater than or equal to 40° and less than or equal to $2\theta_{top}$ was defined as $2\theta_L$. The diffraction angle $2\theta$ at which the intensity was closest to the $I_{htop}$ within a range of greater than or equal to $2\theta_{top}$ and less than or equal to 50° was defined as $2\theta_H$. FWHM is the difference between $2\theta_H$ and $2\theta_L$. FWHM of the positive electrode active material in Example 1 was 0.24 deg.
Subsequently, a crystalline Si powder was subjected to X-ray diffraction measurement under the same conditions as those for the positive electrode active material of Example 1. On this occasion, as the crystalline Si powder, a standard sample NIST 640d was used. The value of the diffraction angle $2\theta$ of a peak having the highest intensity within a diffraction angle $2\theta$ range of greater than or equal to 28.0° and less than or equal to 28.6° was defined as $2\theta_{top}$, and the intensity of the peak was defined as $I_{top}$. The intensity at a diffraction angle $2\theta$ of 28.0° was defined as $I_{bg}$. As a result, the $FWHM_{Si}$ of the crystalline Si powder was 0.16 deg.

[Production of halide solid electrolyte]

Raw material powders of LiCl and $YCl_3$ were weighed at a molar ratio of $LiCl:YCl_3$ = 3:1 in an argon glove box with a dew point of less than or equal to -60°C, and were pulverized and mixed in a mortar. Subsequently, milling treatment was performed using a planetary ball mill at 600 rpm for 12 hours.
Consequently, a powder of a halide solid electrolyte represented by the formula of $Li_3YCl_6$ was obtained.

[Production of positive electrode material]

A halide solid electrolyte $Li_3YCl_6$ and the positive electrode active material NCM-1 of Example 1 were weighed at a mass ratio of $Li_3YCl_6$:NCM-1 = 25:75 in an argon glove box with a dew point of less than or equal to -60°C, and were mixed in an agate mortar to produce a positive electrode material of Example 1.

[Production of sulfide solid electrolyte]

$Li_2S$ and $P_2S_5$ were weighed at a molar ratio of $Li_2S:P_2S_5$ = 75:25 in an argon glove box with a dew point of less than or equal to -60°C, and were pulverized and mixed in a mortar. Subsequently, milling treatment was performed using a planetary ball mill (manufactured by Fritsch GmbH, model P-7) at 510 rpm for 10 hours to obtain a glassy solid electrolyte. The glassy solid electrolyte was heat-treated at 270°C in an inert atmosphere for 2 hours. Consequently, a glass-ceramic sulfide solid electrolyte was obtained.

[Production of secondary battery]

The following process was performed using the positive electrode material and sulfide solid electrolyte of Example 1 above.

First, in an insulating outer cylinder, 120 mg of a sulfide solid electrolyte and 25 mg of the positive electrode material of Example 1 were stacked in this order and were compression-molded at a pressure of 700 MPa to obtain a positive electrode and a solid electrolyte layer.

Secondary, metal Li (thickness: 200 $\mu$m) was stacked on the solid electrolyte layer on the side opposite to the side in contact with the positive electrode, and they were compression-molded at a pressure of 80 MPa to produce a stack composed of a positive electrode, a solid electrolyte layer, a negative electrode.

Subsequently, stainless steel current collectors were disposed on and under the stack, and a current collector lead was attached to each of the current collectors.

Finally, the insulating outer cylinder was sealed with an insulating ferrule to isolate the inside of the outer cylinder from the outside atmosphere to produce a battery of Example 1.

[Electrochemical test]

A charge and discharge test was carried out using the battery of Example 1 under the following conditions.

The battery was placed in a thermostat of 25°C and was connected to a charge and discharge device.

Constant current charging was performed until a voltage of 4.3 V at a current value of 390 $\mu$A that was 0.1 C-rate (10 hour rate) with respect to the theoretical capacity of the battery, and constant voltage charging was performed at a voltage of 4.3 V. The charging was stopped at a current value of 39 $\mu$A that was 0.01 C-rate (100 hour rate). Subsequently, similarly, constant current discharging was performed at 0.1 C-rate until a voltage of 2.5 V, and constant voltage discharging was performed at a voltage of 2.5 V until 0.01 C-rate.

Subsequently, charging was performed again under the same conditions, and constant current discharging was performed at 0.1 C-rate until a voltage of 3.78 V, and constant voltage discharging was performed at a voltage of 3.78 V until 0.01 C-rate. Furthermore, after a rest, constant current discharging was performed at 6.5 mA for 5 seconds. On this occasion, the direct-current resistance of the battery obtained by the following Equation (3) is called DCR.

$$DCR = (Vo - V) \times S/I \qquad (3)$$

Where, Vo is a voltage before discharging for 5 seconds, V is a voltage after discharging for 5 seconds, S is an area where the positive electrode and the solid electrolyte layer are in contact with each other, and I is 6.5 mA.

The DCR of the battery of Example 1 was 58 $\Omega \cdot cm^2$.

«Examples 2 to 8»

[Production of positive electrode active material]

A mixture of an oxide including nickel, cobalt, and manganese and lithium hydroxide was produced by the same procedure as in Example 1 and was heat-treated at 825°C in an oxygen atmosphere to produce a positive electrode active material $LiNi_{0.8}(Co,Mn)_{0.2}O_2$. A positive electrode active material NCM-2 of Example 2 was thus obtained.

A mixture of an oxide including nickel, cobalt, and manganese and lithium hydroxide was produced by the same procedure as in Example 1 and was heat-treated at 800°C in an oxygen atmosphere to produce a positive electrode active material $LiNi_{0.8}(Co,Mn)_{0.2}O_2$. A positive electrode active material NCM-3 of Example 3 was thus obtained.

A mixture of an oxide including nickel, cobalt, and manganese and lithium hydroxide was produced by the same procedure as in Example 1 and was heat-treated at 775°C in an oxygen atmosphere to produce a positive electrode active material $LiNi_{0.8}(Co,Mn)_{0.2}O_2$. A positive electrode active material NCM-4 of Example 4 was thus obtained.

Nickel sulfate, cobalt sulfate, and sodium aluminate were dissolved in water, and nickel, cobalt, and aluminum were coprecipitated with an alkali aqueous solution containing sodium hydroxide to produce a hydroxide of nickel, cobalt, and aluminum. This hydroxide was subjected to filtration, drying, and thermal decomposition to produce an oxide including nickel, cobalt, and aluminum at an intended ratio. This oxide and lithium hydroxide were mixed and were heat-treated at 850°C in an oxygen atmosphere to produce a positive electrode active material $LiNi_{0.8}(Co,Al)_{0.2}O_2$. Hereinafter, the produced $LiNi_{0.8}(Co,Al)_{0.2}O_2$ is referred to as NCA-1. Thus, a positive electrode active material of Example 5 was obtained.

A mixture of an oxide including nickel, cobalt, and aluminum and lithium hydroxide was produced by the same procedure as in Example 5 and was heat-treated at 825°C in an oxygen atmosphere to produce a positive electrode active material $LiNi_{0.8}(Co,Al)_{0.2}O_2$. A positive electrode active material NCA-2 of Example 6 was thus obtained.

A mixture of an oxide including nickel, cobalt, and aluminum and lithium hydroxide was produced by the same procedure as in Example 5 and was heat-treated at 800°C in an oxygen atmosphere to produce a positive electrode active material $LiNi_{0.8}(Co,Al)_{0.2}O_2$. A positive electrode active material NCA-3 of Example 7 was thus obtained.

A mixture of an oxide including nickel, cobalt, and aluminum and lithium hydroxide was produced by the same procedure as in Example 5 and was heat-treated at 775°C in an oxygen atmosphere to produce a positive electrode active material $LiNi_{0.8}(Co,Al)_{0.2}O_2$. A positive electrode active material NCA-4 of Example 8 was thus obtained.

[Measurement of full width at half maximum]

Fig. 3 is a graph showing X-ray diffraction patterns of the positive electrode active materials of Examples 2 to 8. The full widths at half maximum of the positive electrode active materials produced in Examples 2 to 8 were measured as in Example 1. The full widths at half maximum of the positive electrode active materials of Examples 2 to 8 are shown in Table 1 below.

[Production of positive electrode material]

Positive electrode materials of Examples 2 to 8 were produced as in Example 1 except that the positive electrode active materials of Examples 2 to 8 were used as the positive electrode active materials, respectively.

[Production of battery]

Batteries of Examples 2 to 8 were produced as in Example 1 except that the positive electrode materials of Examples 2 to 8 were used as the positive electrode materials, respectively.

[Electrochemical test]

A charge and discharge test was performed as in Example 1 using the batteries of Examples 2 to 8. The DCRs of the batteries of Examples 2 to 8 are shown in Table 1 below.

<<Comparative Example 1>>

[Production of positive electrode active material]

A mixture of an oxide including nickel, cobalt, and manganese and lithium hydroxide was produced by the same procedure as in Example 1 and was heat-treated at 750°C in an oxygen atmosphere to produce a positive electrode active material $LiNi_{0.8}(Co,Mn)_{0.2}O_2$. A positive electrode active material NCM-Ref. of Comparative Example 1 was thus obtained.

[Measurement of full width at half maximum]

Fig. 3 is a graph showing an X-ray diffraction pattern of the positive electrode active material of Comparative Example 1. The full width at half maximum of the positive electrode active material produced in Comparative Example 1 was measured as in Example 1. The full width at half maximum of the positive electrode active material of Comparative Example 1 is shown in Table 1 below.

[Production of positive electrode material]

A positive electrode material of Comparative Example 1 was produced as in Example 1 except that the positive electrode active material of Comparative Example 1 was used as the positive electrode active material.

[Production of battery]

A battery of Comparative Example 1 was produced as in Example 1 except that the positive electrode material of Comparative Example 1 was used as the positive electrode material.

[Electrochemical test]

A charge and discharge test was performed as in Example 1 using the battery of Comparative Example 1. The DCR of the battery of Comparative Example is shown in Table 1 below.

[Table 1]

|  | Positive electrode active material | FWHM [deg.] | FWHM/FWHM$_{Si}$ | DCR [$\Omega \cdot cm^2$] |
|---|---|---|---|---|
| Example 1 | NCM-1 | 0.24 | 1.60 | 58 |
| Example 2 | NCM-2 | 0.27 | 1.80 | 59 |
| Example 3 | NCM-3 | 0.28 | 1.87 | 64 |
| Example 4 | NCM-4 | 0.29 | 1.93 | 63 |
| Example 5 | NCA-1 | 0.26 | 1.73 | 48 |
| Example 6 | NCA-2 | 0.27 | 1.80 | 49 |
| Example 7 | NCA-3 | 0.29 | 1.93 | 58 |
| Example 8 | NCA-4 | 0.30 | 2.00 | 68 |
| Comparative Example 1 | NCM-ref. | 0.31 | 2.07 | 70 |

<<Consideration>>

From the results shown in Table 1, it was demonstrated by comparison of Examples 1 to 8 with Comparative Example 1 that the DCRs of the batteries of Examples 1 to 8 that satisfy the requirement of FWHM/FWHM$_{Si}$ ≤ 2.00 can be reduced to be lower than the DCR of the battery of Comparative Example 1 in which the FWHM/FWHM$_{Si}$ exceeded 2.0. Furthermore, it was also demonstrated from the results shown in Table 1 that when the FWHM/FWHM$_{Si}$ is less than or equal to 1.90, the DCR is further reduced. It was demonstrated by comparison of the batteries of Examples 1 to 4 using the positive electrode active material NCMs having the same composition that the smaller the full width at half maximum value FWHM, the more the DCR can be reduced. This was the same in the batteries of Examples 5 to 8 using the positive electrode active material NCAs.

Industrial Applicability

The positive electrode active material of the present disclosure can be used in, for example, the positive electrode of a battery such as an all-solid-state battery.

Reference Signs List

1000 electrode material
100 solid electrolyte
110 positive electrode active material
120 coating material
2000 battery
201 positive electrode
202 electrolyte layer
203 negative electrode

**Claims**

**1.** A positive electrode active material comprising a complex oxide represented by the following Formula (1):

$$LiNi_xMe_{1-x}O_2 \qquad (1)$$

where

x satisfies $0.5 \leq x < 1$, and

Me is at least one selected from the group consisting of Co, Mn, Al, Mg, Ca, Sr, Ba, B, Ga, Y, Ce, Sm, Gd, Er, Ti, Zr, V, Nb, Ta, Sb, Bi, Cr, Mo, and W, wherein

in an X-ray diffraction pattern obtained by X-ray diffraction measurement of the positive electrode active material using Cu-K$\alpha$ rays, a ratio of a value of a full width at half maximum of a peak having a highest intensity within a diffraction angle 2$\theta$ range of greater than or equal to 40° and less than or equal to 50° to a value of a full width at half maximum of a peak corresponding to a (111) plane of a crystalline Si powder measured under the same conditions is less than or equal to 2.00.

2. The positive electrode active material according to claim 1, wherein
the ratio of the full widths at half maximum of the peaks is less than or equal to 1.90.

3. A coated positive electrode active material comprising:

the positive electrode active material according to claim 1 or 2; and
a coating material coating at least a part of a surface of the positive electrode active material, wherein
the coating material includes:

a lithium element (Li); and
at least one selected from the group consisting of an oxygen element (O), a fluorine element (F), and a chlorine element (Cl).

4. A positive electrode material comprising:

at least one selected from the group consisting of the positive electrode active material according to claim 1 or 2 and the coated positive electrode active material according to claim 3; and
a solid electrolyte.

5. The positive electrode material according to claim 4, wherein
the solid electrolyte includes at least one selected from the group consisting of a sulfide solid electrolyte and a halide solid electrolyte.

6. The positive electrode material according to claim 5, wherein

the halide solid electrolyte is represented by the following Formula (2):

$$Li_\alpha M_\beta X_\gamma \qquad (2)$$

where

$\alpha$, $\beta$, and $\gamma$ are each independently a value greater than 0,
M is at least one selected from the group consisting of metal elements excluding Li and metalloid elements, and
X is at least one selected from the group consisting of F, Cl, Br, and I.

7. The positive electrode material according to claim 6, wherein
M includes yttrium.

8. The positive electrode material according to claim 6 or 7, wherein Formula (2) satisfies:

$$2.5 \leq \alpha \leq 3;$$

$$1 \leq \beta \leq 1.1;$$

and

$$\gamma = 6.$$

9.  The positive electrode material according to any one of claims 6 to 8, wherein
    X includes at least one selected from the group consisting of Cl and Br.

10. A battery comprising:

    a positive electrode including the positive electrode material according to any one of claims 4 to 9;
    a negative electrode; and
    an electrolyte layer disposed between the positive electrode and the negative electrode.

11. The battery according to claim 10, wherein
    the electrolyte layer includes a solid electrolyte having a composition that is the same as a composition of the solid
    electrolyte included in the positive electrode material.

12. The battery according to claim 10 or 11, wherein
    the electrolyte layer includes a halide solid electrolyte having a composition that is different from a composition of
    the solid electrolyte included in the positive electrode material.

13. The battery according to any one of claims 10 to 12, wherein
    the electrolyte layer includes a sulfide solid electrolyte.

# FIG. 1

## 1000

100     110     120

# FIG. 2

## 2000

201

202

203

## 1000

100     110     120

# FIG. 3

INTENSITY

10   20   30   40   50

$2\theta°$

INTENSITY

$2\theta°$

EXAMPLE 1
EXAMPLE 2
EXAMPLE 3
EXAMPLE 4
EXAMPLE 5
EXAMPLE 6
EXAMPLE 7
EXAMPLE 8
COMPARATIVE
EXAMPLE 1

## INTERNATIONAL SEARCH REPORT

| | International application No. |
| --- | --- |
| | **PCT/JP2022/020873** |

**A. CLASSIFICATION OF SUBJECT MATTER**

*H01M 4/525*(2010.01)i; *H01M 4/131*(2010.01)i; *H01M 4/36*(2006.01)i; *H01M 4/505*(2010.01)i; *H01M 4/62*(2006.01)i; *H01M 10/052*(2010.01)i; *H01M 10/0562*(2010.01)i

FI: H01M4/525; H01M4/505; H01M4/36 A; H01M4/36 C; H01M4/131; H01M4/62 Z; H01M10/0562; H01M10/052

According to International Patent Classification (IPC) or to both national classification and IPC

**B. FIELDS SEARCHED**

Minimum documentation searched (classification system followed by classification symbols)

H01M4/525; H01M4/131; H01M4/36; H01M4/505; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-18803 A (SAMSUNG SDI CO LTD) 29 January 2015 (2015-01-29)<br>claims, paragraphs [0035]-[0036], [0045]-[0046], [0085]-[0089], [0111]-[0113], [0151], examples, fig. 3A | 1-3 |
| Y | | 4-13 |
| X | JP 2018-206609 A (GS YUASA CORP) 27 December 2018 (2018-12-27)<br>claims, paragraphs [0020]-[0025], examples | 1-2 |
| A | | 3-13 |
| Y | WO 2019/135322 A1 (PANASONIC IP MAN CO LTD) 11 July 2019 (2019-07-11)<br>claims | 4-13 |

☐ Further documents are listed in the continuation of Box C.　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 June 2022** | **05 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/020873**

| Patent document cited in search report | | | Publication date (day/month/year) | Patent family member(s) | | Publication date (day/month/year) |
|---|---|---|---|---|---|---|
| JP | 2015-18803 | A | 29 January 2015 | US 2015/0010819 A1<br>claims, paragraphs [0016], [0051]-[0052], [0061]-[0062], [0102]-[0106], [0129]-[0131], [0171], examples, fig. 3A<br>EP 2824735 A2<br>claims, paragraphs [0034]-[0035], [0044]-[0045], [0085]-[0089], [0112]-[0114], [0154], examples, fig. 3A<br>KR 10-2015-0006283 A<br>CN 104282903 A | | |
| JP | 2018-206609 | A | 27 December 2018 | (Family: none) | | |
| WO | 2019/135322 | A1 | 11 July 2019 | US 2020/0328467 A1<br>claims<br>EP 3736892 A1<br>claims<br>CN 111492517 A | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019125510 A